# EUROPEAN PATENT SPECIFICATION

(11) **EP 2 799 734 B1**
(45) Date of publication and mention of the grant of the patent: **21.08.2019**
(21) Application number: 12863436.7
(22) Date of filing: 28.12.2012
(51) Int. Cl.: F16D 13/52, F16D 43/21, F16D 13/56

(54) **POWER TRANSMISSION DEVICE**
STROMÜBERTRAGUNGSVORRICHTUNG
DISPOSITIF DE TRANSMISSION DE PUISSANCE

(30) Priority: 28.12.2011 JP 2011287229
(43) Date of publication of application: 05.11.2014
(73) Proprietor: Kabushiki Kaisha F.C.C., Hamamatsu-shi, Shizuoka 431-1394 (JP)
(72) Inventor: ISOBE, Kenichirou, Hamamatsu-shi Shizuoka 431-1304 (JP); KAWASHIMA, Shigeki, Hamamatsu-shi Shizuoka 431-1304 (JP); FURUHASHI, Shinji, Hamamatsu-shi Shizuoka 431-1304 (JP); ANDO, Go, Hamamatsu-shi Shizuoka 431-1304 (JP)
(74) Representative: Cohausz & Florack
(86) International application number: PCT/JP2012/084079
(87) International publication number: WO 2013/100130

(56) References cited:
- EP-A2- 2 037 142
- JP-A- 2009 068 578
- JP-A- 2010 053 988
- JP-A- 2010 053 988

## Description

### Field of the Invention

The present invention relates to a power transmitting apparatus for arbitrarily transmitting or cutting-off the rotational driving power of an input member to or from an output member

### Description of Background Art

In general the power transmission apparatus for a motorcycle is intended to arbitrarily perform transmission or cutting-off of the driving power of an engine to or from a transmission and a driving wheel and comprises an input member connected to an engine-side, an output member connected to a transmission and a driving wheel-side, and a clutch member connected to the output member. The driving power can be transmitted by press-contacting a plurality of driving-side clutch discs and driven-side clutch discs each other or cut off by releasing the press-contacting force acting on the driving-side clutch discs and driven-side clutch discs.

More particularly, the power transmitting apparatus of the prior art of e.g. Patent Document below comprises a clutch housing rotatable together with an input member and mounted thereon a plurality of driving-side clutch discs, a plurality of driven-side clutch discs arranged alternately between the driving-side clutch discs, a clutch member connected to an output member, and a pressure member mounted on the clutch member axially movably relative to the clutch member for forcing the driving-side clutch discs and the driven-side cutch discs to be press-contacted each other and release the press-contacting force acting on them in accordance with axial movement relative to the clutch member, and is constructed so as to transmit or cut off the driving power inputted to the input member to or from the output member by press-contacting the driving-side clutch discs and the driven-side clutch discs each other or releasing a press-contacting force acting on them.

### Documents of Prior Art

### Patent Document

Patent Document 1: JP 2010-223296 A. Moreover, EP 2 037 142 A2 relates to a power transmitting apparatus with all features of the preamble of claim 1. In contrast to the power transmitting apparatus of claim 1, the power transmitting apparatus of EP 2 037 142 A2 does not comprise a slide-suppressing member for applying sliding resistance to a pressure member when the pressure member is rotated relative to a clutch member.

### Disclosure of the Invention

### Problems to be solved by the Invention

However, in the power transmitting apparatus of the prior art, the pressure member would be sometimes rotated relative to the clutch member by vibrations transmitted from an engine for example under a condition of a vehicle stopped in a neutral position of a transmission. That is, in usual, the rotational vibration of the pressure member is not restrained although the axial vibration is restrained by using clutch springs etc. Accordingly, it is afraid that structural components of the power transmitting apparatus would be interferred each other and cause abnormal noises or disorder feeling in operation.

It is, therefore, an object of the present invention to provide a power transmitting apparatus which can suppress the rotational vibrations by suppressing rotation of the pressure member relative to the clutch member.

### Means for achieving the object

For achieving the object of the present invention above, there is provided, according to claim 1, a power transmitting apparatus comprising a clutch housing rotatable together with an input member and mounted thereon a plurality of driving-side clutch discs; a clutch member mounted thereon a plurality of driven-side clutch discs arranged between the driving-side clutch discs alternately therewith and connected to an output member; and a pressure member mounted on the clutch member axially movably relative to the clutch member so that the driving-side clutch discs and the driven-side cutch discs are forced to be press-contacted each other and the press-contacting force acting on them are released in accordance with axial approach and separation of the pressure member relative to the clutch member in order to transmit a rotational driving force inputted to the input member to the output member or cut off the rotational driving force from the output member characterized in that the power transmitting apparatus further comprises a slide-suppressing member for applying sliding resistance to the pressure member when the pressure member is rotated relative to the clutch member.

A power transmitting apparatus defined in claim 2 is that of claim 1 wherein the power transmitting apparatus further comprises a press-contact assisting cam for increasing the press-contacting force acting on the driving-side clutch discs and the driven-side clutch discs by causing relative rotation of the pressure member and the clutch member and bringing them close to each other when a condition in which the rotational driving power inputted to the input member can be transmitted to the output member is attained, and a back-torque limiting cam for releasing the press-contacting force acting on the driving-side clutch discs and the driven-side clutch discs by causing relative rotation of the pressure member and the clutch member and separating them from each other when a rotational speed of the output member has exceeded that of the input member.

A power transmitting apparatus defined in claim 3 is that of claim 1 or 2 wherein the pressure member and the clutch member are assembled while being axially fitted each other, and wherein the slide-suppressing member is arranged on fitting surface of the pressure member or of the clutch member.

A power transmitting apparatus defined in claim 4 is that of claim 1 or 2 wherein the slide-suppressing member is arranged on axially facing surface of the pressure member or of the clutch member.

A power transmitting apparatus defined in claim 5 is that of claim 1 or 2 wherein the power transmitting apparatus further comprises a limiting member for preventing the pressure member from being separated from the clutch member exceeding a predetermined distance, and wherein the slide-suppressing member is arranged on the pressure member so that it can slide on a surface of the limiting member.

### Effects of the Invention

According to the present invention of claim 1, since the power transmitting apparatus comprises a slide-suppressing member(s) for applying sliding resistance to the pressure member when the pressure member is rotated relative to the clutch member, it is possible to suppress rotational vibration of the pressure member by suppressing the rotation of the pressure member relative to the clutch member.

According to the present invention of claim 2, since the power transmitting apparatus comprises a press-contact assisting cam for increasing the press-contacting force acting on the driving-side clutch discs and the driven-side clutch discs by causing relative rotation of the pressure member and the clutch member and bringing them close to each other when a condition in which the rotational driving power inputted to the input member can be transmitted to the output member is attained, and a back-torque limiting cam for releasing the press-contacting force acting on the driving-side clutch discs and the driven-side clutch discs by causing relative rotation of the pressure member and the clutch member and separating them from each other when a rotational speed of the output member has exceeded that of the input member, it is possible to prevent the pressure member from being rotationally vibrated due to transmission of vibration of an engine etc. to the pressure member and thus to prevent the vibration from being transmitted to operation means of a vehicle such as a clutch lever etc.

According to the present invention of claim 3, since the pressure member and the clutch member are assembled while being axially fitted each other, and the slide-suppressing member is arranged on fitting surface of the pressure member or of the clutch member, it is possible to suppress the rotational vibration of the pressure member without adverse influence to the operability of the pressure member.

According to the present invention of claim 3, since the slide-suppressing member is arranged on axially facing surface of the pressure member or of the clutch member, it is possible to generate the sliding resistance under a condition in which the pressure member is closed to the clutch member and not to generate the sliding resistance under a condition in which the pressure member is axially separated from the clutch member.

According to the present invention of claim 4, since the power transmitting apparatus further comprises a limiting member for preventing the pressure member from being separated from the clutch member exceeding a predetermined distance, and the slide-suppressing members are arranged on the pressure member so that they can slide on a surface of the limiting member, it is possible to mount or replace the slide-suppressing members under a condition in which the clutch member and the pressure member are assembled each other.

### Brief description of the drawings

[Fig. 1] A longitudinal sectional view of a power transmitting apparatus of a first embodiment of the present invention;
[Fig.2(a)] A plan view showing a clutch member of the power transmitting apparatus of Fig. 1;
[Fig. 2(b)] A schematic view showing a first cam surface and a second cam surface of the clutch member
[Fig. 3(a)] A plan view showing a pressure member of the power transmitting apparatus of Fig. 1;
[Fig. 3(b)] A schematic view showing a condition in which a slide-suppressing member is mounted;
[Fig. 4] A schematic view showing an action of a press-contact assisting cam of the power transmitting apparatus of Fig. 1;
[Fig. 5] A schematic view showing a back-torque limiting cam of the power transmitting apparatus of Fig. 1;
[Fig. 6] A longitudinal sectional view of a power transmitting apparatus of a second embodiment of the present invention;
[Fig. 7] A longitudinal sectional view of a power transmitting apparatus of a third embodiment of the present invention;
[Fig. 8] A longitudinal sectional view of a power transmitting apparatus of a fourth embodiment of the present invention; and
[Fig. 9] A longitudinal sectional view of a power transmitting apparatus of a fifth embodiment of the present invention.

### Modes for carrying out the Invention

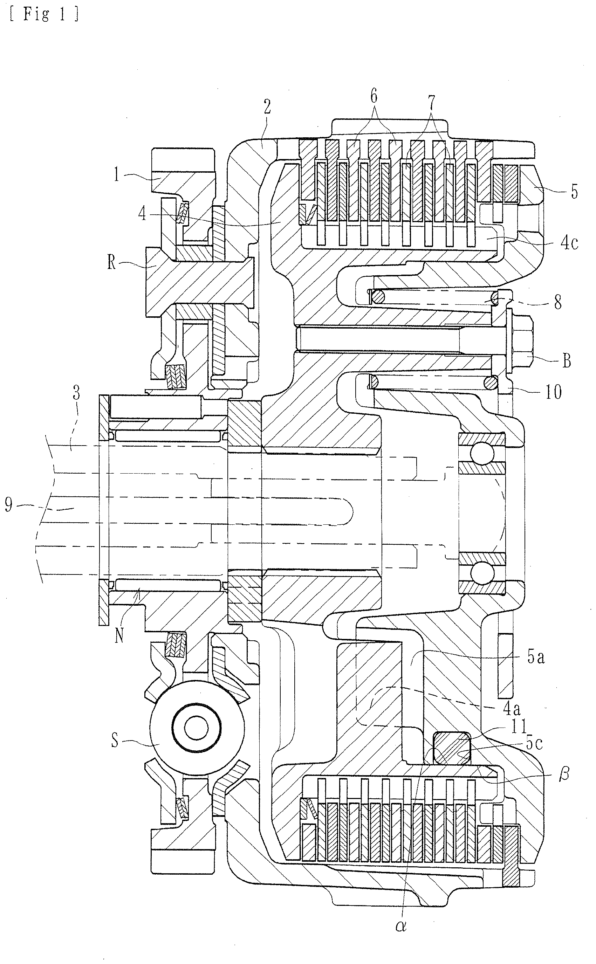

Preferable embodiments of the present invention will be hereinafter described with reference to the accompanying drawings.
A power transmitting apparatus of a first embodiment of the present invention is mounted on a vehicle such as a motorcycle to arbitrarily transmit or cut off the driving power of an engine to or from a transmission or driving wheel. As shown in Figs. 1∼3, the power transmitting apparatus mainly comprises a clutch housing 2 formed by die-casting on which a gear 1 as an input member is mounted, a clutch member 4 connected to a shaft 3 as an output member, a pressure member 5 fitted on the clutch member 4 at its right-hand end, driving-side clutch discs 6 mounted on the clutch housing 2, and driven-side clutch discs 7 connected to the clutch member 4, a first and second cam surfaces 4a, 4b of clutch member-side formed on the clutch member 4, first and second cam surfaces 5a, 5b of pressure member-side formed on the pressure member 5, a limiting member 10, and a slide-suppressing member 11. A reference character "S" denotes dampers and "N" denotes a needle bearings.

The gear 1 can be rotated around the shaft 3 by the driving power (rotational power) transmitted from the engine and connected to the clutch housing 2 via rivets "R" etc. The clutch housing 2 is formed as a cylindrical casing opened at its right-hand end seen in Fig.1 and a plurality of driving-side clutch discs 6 are mounted on the inner circumference of the clutch housing 2. Each of the driving-side clutch discs 6 comprises a substantially annular plate and is adapted to be spline-engaged with spline formed on the inner circumference of the clutch housing 2 so as to be rotatable together with the clutch housing 2 and axially slidable (left-hand and right-hand directions seen in Fig. 1) therealong.

The clutch member 4 comprises a member to be arranged within the clutch housing 2 and is formed with a splined bore in its center for receiving a splined end of the shaft 3. This enables the shaft 3 to be rotated together with the clutch member 4. The outer circumference of the clutch member 4 is formed with spline (spline-fitting portion 4c) on which the driven-side clutch discs 7 are fitted.

More in detail, the spline (spline-fitting portion 4c) formed on the clutch member 4 is alternately arranged projections and grooves integrally formed on the outer circumference of the clutch member 4 substantially all around thereof so as to be engaged with the spline formed on the driven-side clutch discs 7 so that the driven-side clutch discs 7 can axially move along the spline of the clutch member 4 but cannot rotate relative to the clutch member 4.

The driving-side clutch discs 6 and driven-side clutch discs 7 are alternately arranged to form a lamination and adapted to be press-contacted and released from the press-contacting force. That is, both clutch discs 6, 7 are allowed to be axially slid along the clutch housing 2 and the clutch member 4 respectively and press-contacted when they are pressed toward the left-hand direction in Fig. 1 by the pressure member 5 so that the rotational driving force of the clutch housing 2 can be transmitted to the shaft 3 via the clutch member 4. On the contrary, when the pressing force of the pressure member 5 is released, the press-contacting force between the clutch discs 6, 7 is also released and accordingly the transmission of the rotational force to the shaft 3 is cut off.

The pressure member 5 is fitted to the clutch member 4 at the right-hand end (Fig. 1) thereof and adapted to be axially moved to left and right-hand directions in Fig. 1 relative to the clutch member 4 so as to press-contact the driving-side and driven-side clutch discs 6, 7 and release the pressing force between them. More in detail, the pressure member 5 is normally urged toward a left-hand direction (Fig. 1) by clutch springs 8 and can be moved toward a right-hand direction (a direction separating from the clutch member 4 by actuating an operating means such as a clutch lever and projecting a push rod 9 axially extending within the shaft 3 toward a right-hand direction against urging force of the clutch springs 8.

Accordingly, the press-contacting force between the driving-side clutch discs 6 and the driven-side clutch discs 7 is released and thus the rotational driving force inputted to the gear 1 and the clutch housing 2 is cut off without being transmitted to the clutch member 4 and the shaft 3 when the pressure member 5 is returned toward the right-hand direction. That is, the pressure member 5 structured so that it can press-contact the driving-side clutch discs 6 and the driven-side clutch discs 7 or release the pressing force between them according to the axial movement of the pressure member 5 relative to the clutch member 4.

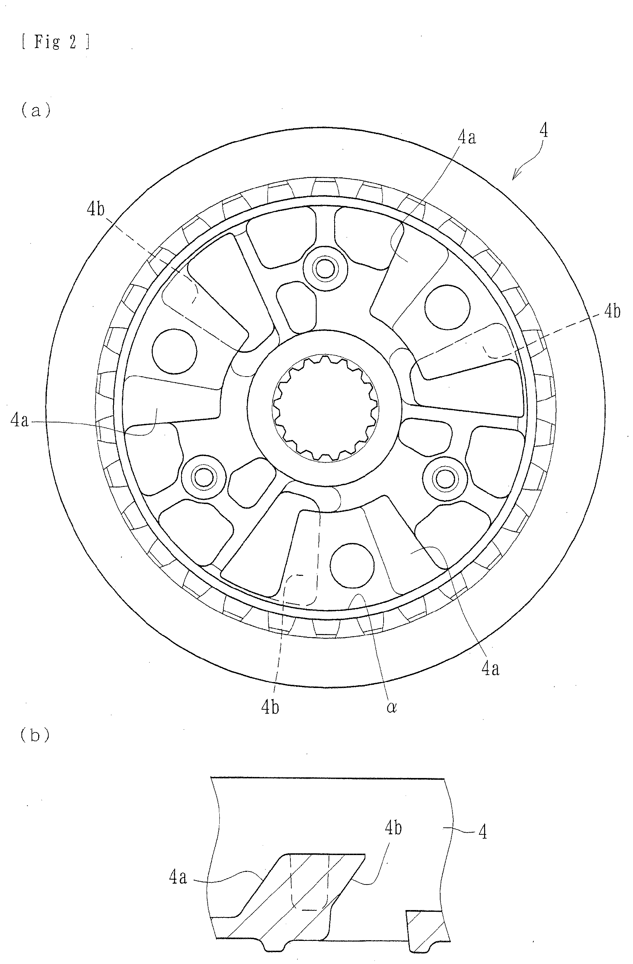

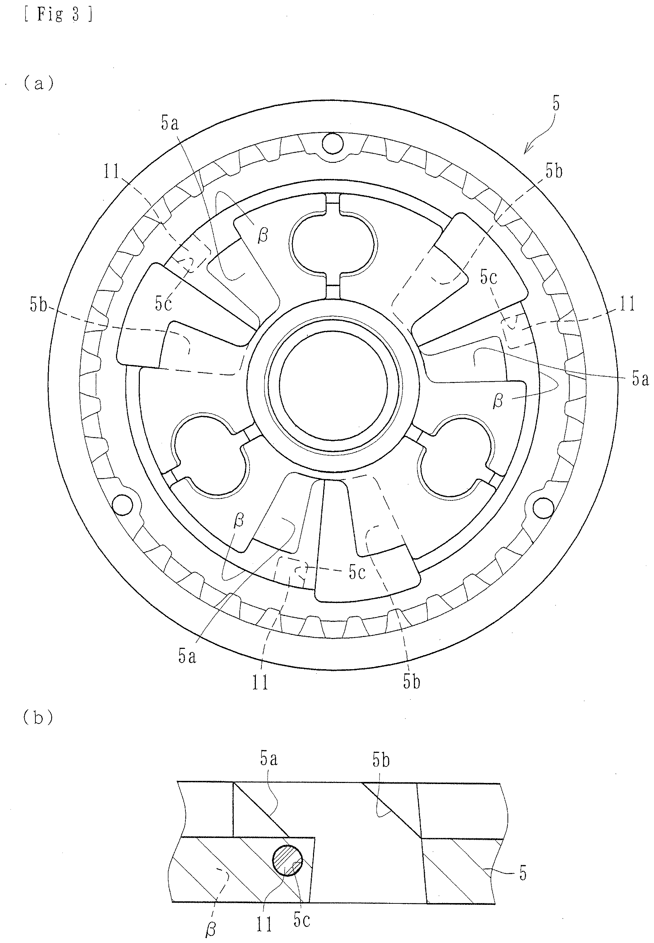

As shown in Figs. 2 and 3, the clutch member 4 is formed with a first cam surface 4a and a second cam surface 4b of clutch member-side, and the pressure member 5 is formed with a first cam surface 5a and a second cam surface 5b of pressure member-side. A press-contact assisting cam is formed of an oppositely arranged combination of the first cam surface 4a of clutch member-side and the first cam surface 5a of pressure member-side, and a back-torque limiting cam is formed of an oppositely arranged combination of the second cam surface 4b of pressure member-side and the second cam surface 5b.

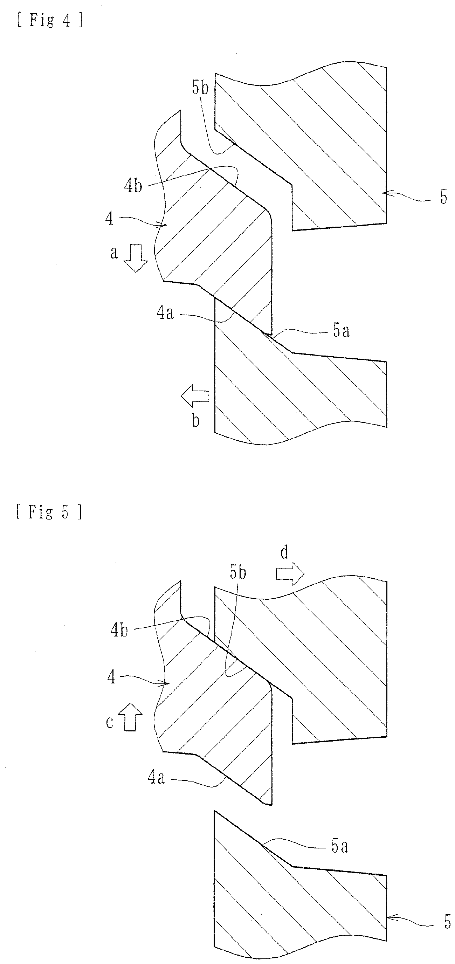

The press-contact assisting cam functions to increase the press-contacting force between the driving-side clutch discs 6 and the driven-side clutch discs 7 by forcing them to be closed to each other due to relative rotation of the pressure member 5 and the clutch member 4 when a condition in which the rotational driving force inputted to the clutch housing (input member) 2 can be transmitted to the shaft (output member) 3 has been attained. That is, since the clutch member 4 rotates in an "a" direction relative to the pressure member 5 as shown in Fig. 4 when the condition in which the rotational driving force inputted to the clutch housing (input member) 2 can be transmitted to the shaft (output member) 3 has been attained, the first cam surface 4a of clutch member-side is abutted against the first cam surface 5a of pressure member-side and thus the pressure member 5 is moved to a "b" direction by cam action of these cam surfaces 4a, 5a and accordingly the press-contacting force between the driving-side clutch discs 6 and the driven-side clutch discs 7 is increased.

The back-torque limiting cam functions to release the press-contacting force between the driving-side clutch discs 6 and the driven-side clutch discs 7 by forcing them to be separated from each other due to relative rotation of the pressure member 5 and the clutch member 4 when a condition in which the rotational speed of the shaft (output member) 3 exceeds that of the clutch housing (input member) 2 has been attained. That is, since the clutch member 4 rotates in a "c" direction relative to the pressure member 5 as shown in Fig. 5 when a condition in which the rotational speed of the shaft (output member) 3 exceeds that of the clutch housing (input member) 2, the second cam surface 4b of clutch member-side is abutted against the second cam surface 5b of pressure member-side and thus the pressure member 5 is moved to a "d" direction by cam action of these cam surfaces 4b, 5b and accordingly the press-contacting force between the driving-side clutch discs 6 and the driven-side clutch discs 7 is released.

The limiting member 10 is formed of an annular member for preventing the pressure member 5 from being separated from the clutch member 4 exceeding a predetermined distance and connected to the clutch member 4 via a bolt "B" so as to receiving one end of each clutch spring 8 as shown in Fig. 1. The other end of each clutch spring 8 is received by the pressure member 5 so as to urge the pressure member 5 toward the clutch member 4.

According to this embodiment of the present invention, the pressure member 5 is assembled to the clutch member 4 with being axially fitted each other and the slide-suppressing members 11 are arranged on a fitting surface "β" of the pressure member 5 not on a fitting surface "α" of the clutch member 4. More in detail, mounting recesses 5c are formed on the fitting surface "β" of the pressure member 5 at its predetermined positions as shown in Fig. 3 and the slide-suppressing members 11 are press-fitted in the mounting recesses 5c.

The slide-suppressing members 11 are formed of rubber and function to apply sliding resistance to the pressure member 5 when the pressure member 5 is rotated relative to the clutch member 4. That is, the slide-suppressing members 11 slide on the fitting surface "α" of the clutch member 4 and cause sliding resistance against the fitting surface "α" when the pressure member 5 rotates relative to the clutch member 4. Although it is shown in this embodiment that the slide-suppressing members 11 are arranged on the fitting surface "β" of the pressure member 5, it is possible to arrange the slide-suppressing members 11 on the fitting surface "α" of the clutch member 4.

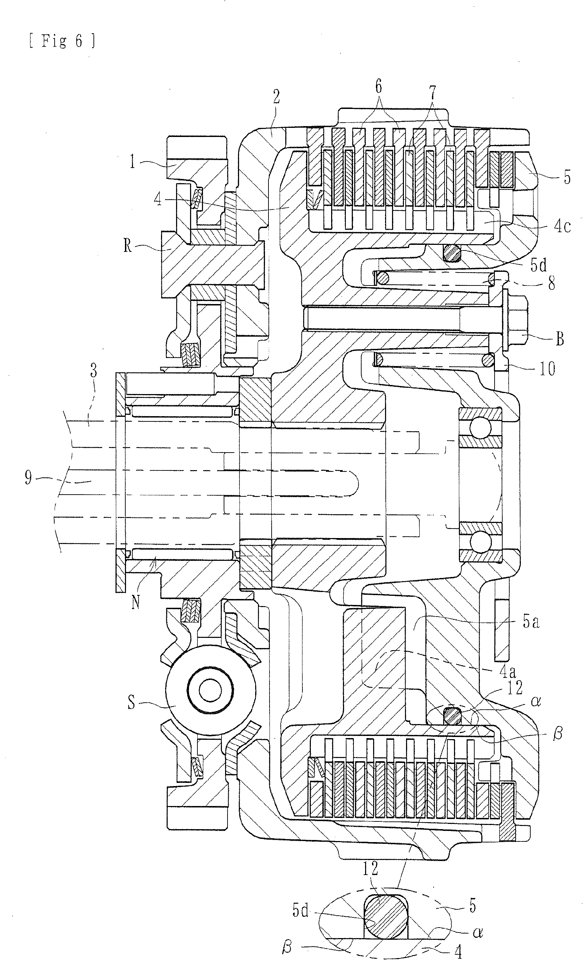

Then a second embodiment of the present invention will be described. Similarly to the first embodiment, a power transmitting apparatus of the second embodiment is mounted on vehicles such as a motorcycle etc. to arbitrarily transmit or cut off the driving power of an engine to or from a transmission or driving wheel. As shown in Fig. 6, the power transmitting apparatus mainly comprises a clutch housing 2 formed by die-casting on which a gear 1 as an input member is mounted, a clutch member 4 connected to a shaft 3 as an output member, a pressure member 5, driving-side clutch discs 6 and driven-side clutch discs 7, a limiting member 10, and a slide-suppressing member 12.

Similarly to the first embodiment, the power transmitting apparatus of this embodiment is formed with a first cam surface 4a of clutch member-side and a first cam surface 5a of pressure member-side forming a press-contact assisting cam, and a second cam surface 4b of clutch member-side and a second cam surface 5b of pressure member-side forming a back-torque limiting cam respectively. Same reference numerals are used for designating same components as those used in the first embodiment and detailed description of them will be omitted.

According to this embodiment of the present invention, the slide-suppressing member 12 is arranged on the fitting surface "β" of the pressure member 5 not on the fitting surface "α" of the clutch member 4. More in detail, a mounting groove 5d is formed on the fitting surface "β" of the pressure member 5 therealong as shown in Fig. 6 and the slide-suppressing member 12 is press-fitted in the mounting groove 5d

The slide-suppressing member 12 is formed of an annular sealing member (e.g. 0-ring etc.) and functions to apply sliding resistance to the pressure member 5 when the pressure member 5 is rotated relative to the clutch member 4. That is, the slide-suppressing member 12 slides on the fitting surface "α" of the clutch member 4 and cause sliding resistance against the fitting surface "α" when the pressure member 5 rotates relative to the clutch member 4. Although it is shown in this embodiment that the slide-suppressing member 12 is arranged on the fitting surface "β" of the pressure member 5, it is possible to arrange the slide-suppressing member 12 on the fitting surface "α" of the clutch member 4.

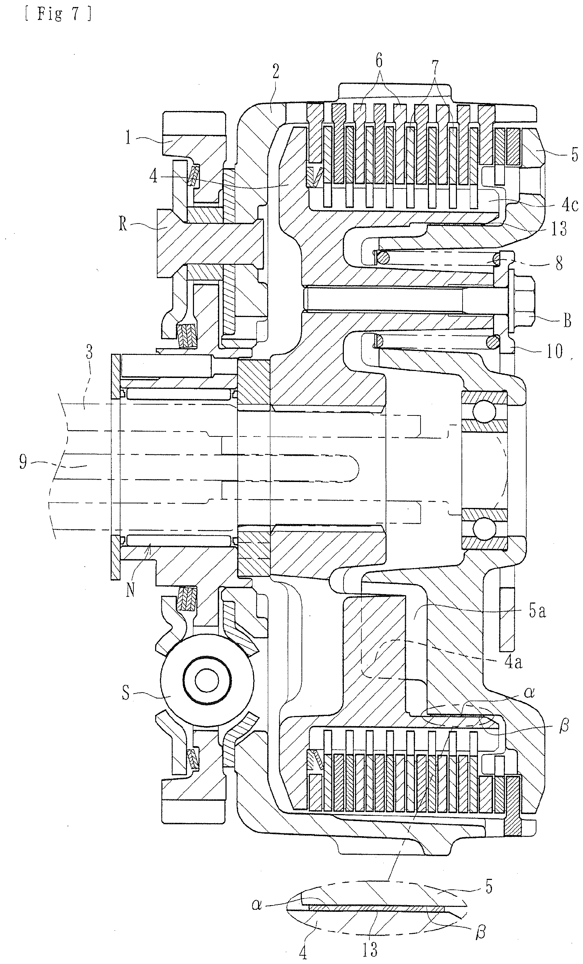

Then a third embodiment of the present invention will be described. Similarly to the previous embodiments, a power transmitting apparatus of this embodiment is mounted on vehicles such as a motorcycle etc. to arbitrarily transmit or cut off the driving power of an engine to or from a transmission or driving wheel. As shown in Fig. 7, the power transmitting apparatus mainly comprises a clutch housing 2 formed by die-casting on which a gear 1 as an input member is mounted, a clutch member 4 connected to a shaft 3 as an output member, a pressure member 5, driving-side clutch discs 6 and driven-side clutch discs 7, a limiting member 10, and a slide-suppressing member 13.

Similarly to the first embodiment, the power transmitting apparatus of this embodiment is formed with a first cam surface 4a of clutch member-side and a first cam surface 5a of pressure member-side forming a press-contact assisting cam, and a second cam surface 4b of clutch member-side and a second cam surface 5b of pressure member-side forming a back-torque limiting cam respectively. Same reference numerals are used for designating same components as those used in the first embodiment and detailed description of them will be omitted.

According to this embodiment of the present invention, a slide-suppressing member 13 is arranged on the fitting surface "β" of the pressure member 5 not on the fitting surface "α" of the clutch member 4. More in detail, the slide-suppressing member 13 is mounted on the fitting surface "β" of the pressure member 5 therealong for example by adhesion as shown in Fig. 7.

The slide-suppressing member 13 is formed of a frictional sheet member and functions to apply sliding resistance to the pressure member 5 when the pressure member 5 is rotated relative to the clutch member 4. That is, the slide-suppressing member 13 slides on the fitting surface "α" of the clutch member 4 and cause sliding resistance against the fitting surface "α" when the pressure member 5 rotates relative to the clutch member 4. Although it is shown in this embodiment that the slide-suppressing member 13 is arranged on the fitting surface "β" of the pressure member 5, it is possible to arrange the slide-suppressing member 13 on the fitting surface "α" of the clutch member 4.

According to the first∼third embodiments of the present invention, since they are provided with slide-suppressing members 11∼13 applying sliding resistance to the pressure member 5 when the pressure member 5 is rotated relative to the clutch member 4, it is possible to suppress the vibration of the pressure member 5 by suppressing the rotation of the pressure member 5 relative to the clutch member 4. More particularly according to the present invention, since the power transmitting apparatus comprises the press-contact assisting cam and the back-torque limiting cam, it is possible to prevent the pressure member 5 from being rotationally vibrated due to transmission of vibration of an engine etc. to the pressure member and thus to prevent the vibration from being transmitted to operation means of a vehicle such as a clutch lever etc.

In addition, according to the first∼third embodiments of the present invention, since the pressure member 5 and the clutch member 4 are assembled with being axially fitted each other, and the slide-suppressing members 11∼13 are arranged on fitting surface α or β of the pressure member 5 or of the clutch member 4, it is possible to avoid generation of other resistances (e.g. compression resistance etc.) in addition to the sliding resistance by the slide-suppressing members 11∼13 and thus to suppress the rotational vibration of the pressure member 5 without adverse influence to the operability of the pressure member 5.

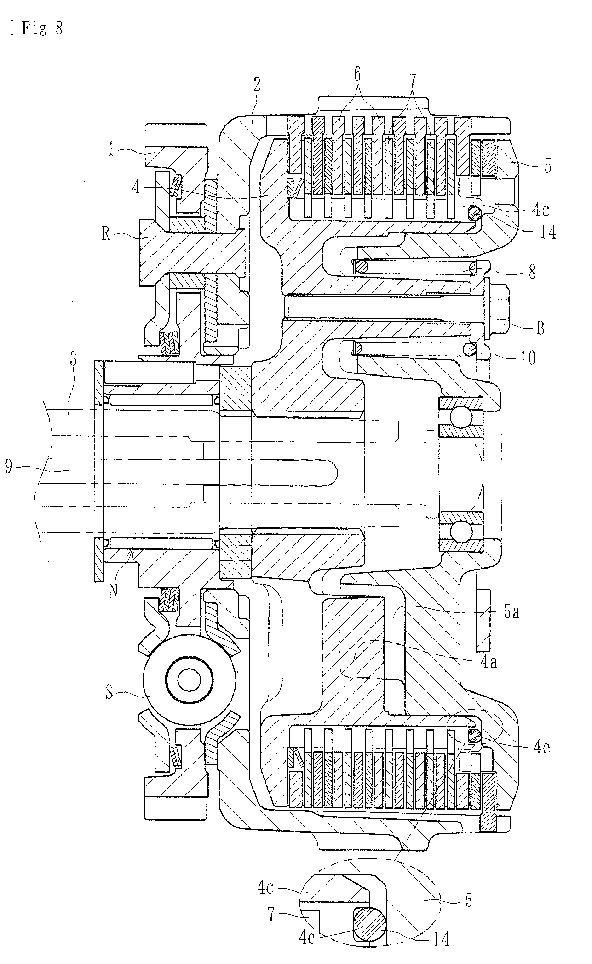

Then a fourth embodiment of the present invention will be described. Similarly to the previous embodiments, a power transmitting apparatus of this embodiment is mounted on vehicles such as a motorcycle etc. to arbitrarily transmit or cut off the driving power of an engine to or from a transmission or driving wheel. As shown in Fig. 8, the power transmitting apparatus mainly comprises a clutch housing 2 formed by die-casting on which a gear 1 as an input member is mounted, a clutch member 4 connected to a shaft 3 as an output member, a pressure member 5, driving-side clutch discs 6 and driven-side clutch discs 7, a limiting member 10, and a slide-suppressing member 14.

Similarly to the first embodiment, the power transmitting apparatus of this embodiment is formed with a first cam surface 4a of clutch member-side and a first cam surface 5a of pressure member-side forming a press-contact assisting cam, and a second cam surface 4b of clutch member-side and a second cam surface 5b of pressure member-side forming a back-torque limiting cam respectively. Same reference numerals are used for designating same components as those used in the first embodiment and detailed description of them will be omitted.

According to this embodiment of the present invention, a slide-suppressing member 14 is arranged on axially facing surface of the pressure member 5 or of the clutch member 4 (surfaces of the pressure member 5 and the clutch member 4 axially facing to each other). More in detail, an annular mounting groove 4e is formed on the end surface of the clutch member 4 axially facing to the pressure member 5 (upper end face of the spline fitting portion 4c and the annular slide-suppressing member 14 is press-fitted in the annular mounting groove 4e.

The slide-suppressing member 14 is formed of an annular sealing member (e.g. 0-ring etc.) and functions to apply sliding resistance to the pressure member 5 when the pressure member 5 is rotated relative to the clutch member 4. That is, the slide-suppressing member 14 slides on its abutting surface of the pressure member 5 and causes sliding resistance against the abutting surface of the pressure member 5 when the pressure member 5 rotates relative to the clutch member 4. Although it is shown in this embodiment (Fig. 8) that the slide-suppressing member 14 is arranged on the end surface of the clutch member 4, it is possible to arrange the slide-suppressing member 14 on the axially facing surface of the pressure member 5.

According to this embodiment of the present invention, since the power transmitting apparatus is provided with slide-suppressing member 14 applying sliding resistance to the pressure member 5 when the pressure member 5 is rotated relative to the clutch member 4, it is possible to suppress vibration of the pressure member 5 by suppressing rotation of the pressure member 5 relative to the clutch member 4. More particularly according to the present invention, since the slide-suppressing member 14 is arranged on axially facing surface of the pressure member 5 or of the clutch member 4, it is possible to generate the sliding resistance under a condition in which the pressure member 5 is closed to the clutch member 4 and not to generate the sliding resistance under a condition in which the pressure member 5 is axially separated from the clutch member 4.

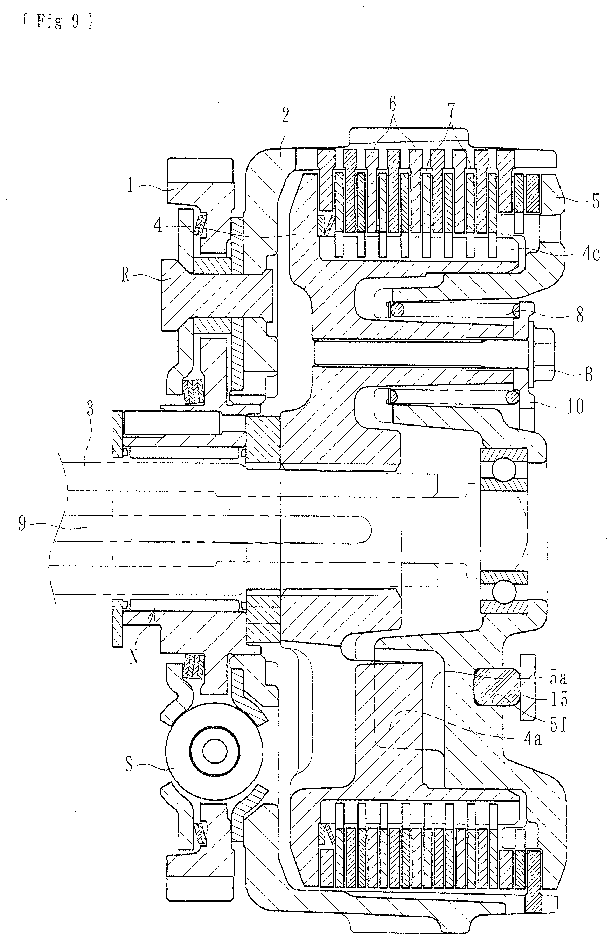

Then a fifth embodiment of the present invention will be described. Similarly to the previous embodiments, a power transmitting apparatus of this embodiment is mounted on vehicles such as a motorcycle etc. to arbitrarily transmit or cut off the driving power of an engine to or from a transmission or driving wheel. As shown in Fig. 9, the power transmitting apparatus mainly comprises a clutch housing 2 formed by die-casting on which a gear 1 as an input member is mounted, a clutch member 4 connected to a shaft 3 as an output member, a pressure member 5, driving-side clutch discs 6 and driven-side clutch discs 7, a limiting member 10, and a slide-suppressing member 15.

Similarly to the first embodiment, the power transmitting apparatus of this embodiment is formed with a first cam surface 4a of clutch member-side and a first cam surface 5a of pressure member-side forming a press-contact assisting cam, and a second cam surface 4b of clutch member-side and a second cam surface 5b of pressure member-side forming a back-torque limiting cam respectively. Same reference numerals are used for designating same components as those used in the first embodiment and detailed description of them will be omitted.

According to this embodiment of the present invention, slide-suppressing members 15 are arranged on the pressure member 5 so as to slide on a surface of the limiting member 10. More in detail as shown in Fig. 9, mounting recesses 5f are formed on the end surface of the pressure member 5 axially facing to a surface of the limiting member 10 mounted on the clutch member 4 and the slide-suppressing members 15 are press-fitted in the mounting recesses 5f. The slide-suppressing members 15 are formed of block-like rubber members (similar to the slide-suppressing members 11) and function to apply sliding resistance to the pressure member 5 (or the limiting member 10) when the pressure member 5 is rotated relative to the clutch member 4. That is, the slide-suppressing members 15 slide on the surface of the limiting member 10 and cause sliding resistance against the sliding surface of the limiting member 10 (accordingly, against the clutch member 4) when the pressure member 5 rotates relative to the clutch member 4.

According to this embodiment of the present invention, since the power transmitting apparatus is provided with slide-suppressing members 15 applying sliding resistance to the pressure member 5 when the pressure member 5 is rotated relative to the clutch member 4, it is possible to suppress vibration of the pressure member 5 by suppressing rotation of the pressure member 5 relative to the clutch member 4. More particularly according to this embodiment, since the power transmitting apparatus comprises the limiting member 10 for preventing the pressure member 5 from being separated from the clutch member 4 exceeding a predetermined distance, and the slide-suppressing members 15 are arranged on the pressure member so that they can slide on a surface of the limiting member 10, it is possible to mount or replace the slide-suppressing members15 under a condition in which the clutch member 4 and the pressure member 5 are assembled each other.

Although several embodiments of the present invention have been described, the present invention is not limited to these embodiments. For example, the slide-suppressing members may be formed of any materials (e.g. any plastics or metals causing sliding resistance other than rubber, O-ring and frictional materials) or may be formed as having any configurations (annular configuration may be formed as block configuration or block configuration may be annular configuration). The present invention may be applied to a power transmitting apparatus having either one of the press-contact assisting cam or back-torque limiting cam. In addition, the present invention may be applied to many kinds of multiple disc clutch type power transmitting apparatus used for automobiles, three-wheeled or four-wheeled buggies or machines for general use other than motorcycles,

### Applicability in industries

The present invention can be applied to any power transmitting apparatus comprising a slide-suppressing member(s) applying sliding resistance to a pressure member when a pressure member is rotated relative to the clutch member although it has different appearance or additional functions other than those shown in the embodiments of the present invention.

### Description of reference numerals

- 1: gear (input member)
- 2: clutch housing (input member)
- 3: shaft (output member)
- 4: clutch member
- 5: pressure member
- 6: driving-side clutch disc
- 7: driven-side clutch disc
- 8: clutch spring
- 9: push rod
- 10: limiting member
- 11∼15: slide-suppressing member

## Claims

1. A power transmitting apparatus comprising:
a clutch housing (2) rotatable together with an input member (1) and mounted thereon a plurality of driving-side clutch discs (6);
a clutch member (4) mounted thereon a plurality of driven-side clutch discs (7) arranged between the driving-side clutch discs (6) alternately therewith and connected to an output member (3); and
a pressure member (5) mounted on the clutch member (4) axially movably relative to the clutch member (4) so that the driving-side clutch discs (6) and the driven-side cutch discs (7) are forced to be press-contacted each other and the press-contacting force acting on them are released in accordance with axial approach and separation of the pressure member (5) relative to the clutch member (4) in order to transmit a rotational driving force inputted to the input member (1) to the output member (3) or cut off the rotational driving force from the output member (3) **characterized in that**:
the power transmitting apparatus further comprises a slide-suppressing member(s) (11, 12, 13, 14, 15) for applying sliding resistance to the pressure member (5) when the pressure member (5) is rotated relative to the clutch member (4); and
**in that** the power transmitting apparatus further comprises a press-contact assisting cam (4a, 5a) for increasing the press-contacting force acting on the driving-side clutch discs (6) and the driven-side clutch discs (7) by causing relative rotation of the pressure member (5) and the clutch member (4) and bringing them close to each other when a condition in which the rotational driving power inputted to the input member (1) can be transmitted to the output member (3) is attained, and a back-torque limiting cam (4b, 5b) for releasing the press-contacting force acting on the driving-side clutch discs (6) and the driven-side clutch discs (7) by causing relative rotation of the pressure member (5) and the clutch member (4) and separating them from each other when a rotational speed of the output member (3) has exceeded that of the input member (1).

2. A power transmitting apparatus of claim 1 wherein the pressure member (5) and the clutch member (4) are assembled with being axially fitted each other, and wherein the slide-suppressing member(s) (11, 12, 13) is arranged on fitting surface of the pressure member (5) or of the clutch member (4).

3. A power transmitting apparatus of claim 1 wherein the slide-suppressing member (14) is arranged on axially facing surface of the pressure member (5) or of the clutch member (4).

4. A power transmitting apparatus of claim 1 wherein the power transmitting apparatus further comprises a limiting member (10) for preventing the pressure member (5) from being separated from the clutch member (4) exceeding a predetermined distance, and wherein the slide-suppressing members (15) are arranged on the pressure member (5) so that they can slide on a surface of the limiting member (10)

## Patentansprüche

1. Kraftübertragungsvorrichtung, umfassend:
ein Kupplungsgehäuse (2), das zusammen mit einem Eingangselement (1) rotierbar ist und an dem eine Vielzahl von Kupplungsscheiben (6) der Antriebsseite montiert ist;
ein Kupplungselement (4), an dem eine Vielzahl von Kupplungsscheiben (7) der Abtriebsseite montiert sind, die abwechselnd zwischen den Kupplungsscheiben (6) der Antriebsseite angeordnet sind und mit einem Ausgangselement (3) verbunden sind; und
ein Druckelement (5), das in Bezug auf das Kupplungselement (4) axial beweglich an dem Kupplungselement (4) montiert ist, so dass die Kupplungsscheiben (6) der Antriebsseite und die Kupplungsscheiben (7) der Abtriebsseite dazu gebracht werden, miteinander in Presskontakt zu gelangen, und die Presskontaktkraft, die auf sie einwirkt, gemäß axialer Annäherung und Trennung des Druckelements (5) in Bezug auf das Kupplungselement (4) freigesetzt wird, um eine Drehantriebskraft, die von dem Eingangselement (1) eingebracht wird, an das Ausgangselement (3) zu übertragen oder die Drehantriebskraft zum Ausgangselement (3) zu unterbrechen,
**dadurch gekennzeichnet, dass**:
die Kraftübertragungsvorrichtung ferner ein oder mehrere Gleitunterdrückungselemente (11, 12, 13, 14, 15) zum Aufbringen eines Gleitwiderstands an dem Druckelement (5) umfasst, wenn das Druckelement (5) in Bezug auf das Kupplungselement (4) gedreht wird; und
dadurch, dass die Kraftübertragungsvorrichtung ferner einen Presskontaktunterstützungsnocken (4a, 5a) zum Erhöhen der Presskontaktkraft, die auf die Kupplungsscheiben (6) der Antriebsseite und die Kupplungsscheiben (7) der Abtriebsseite einwirkt, umfasst, indem eine relative Drehung des Druckelements (5) und des Kupplungselements (4) verursacht wird und diese nahe aneinander gebracht werden, wenn ein Zustand, in dem die Drehantriebskraft, die von dem Eingangselement (1) eingebracht wird, an das Ausgangselement (3) übertragen werden kann, erreicht wird, und einen Rückdrehmoment-Begrenzungsnocken (4b, 5b) zum Freisetzen der Presskontaktkraft, die auf die Kupplungsscheiben (6) der Antriebsseite und die Kupplungsscheiben (7) der Abtriebsseite einwirkt, indem eine relative Drehung des Druckelements (5) und des Kupplungselements (4) verursacht wird und sie voneinander getrennt werden, wenn eine Drehzahl des Ausgangselements (3) die des Eingangselements (1) überstiegen hat.

2. Kraftübertragungsvorrichtung nach Anspruch 1, wobei das Druckelement (5) und das Kupplungselement (4) axial miteinander montiert angeordnet sind, und wobei das eine oder die mehreren Gleitunterdrückungselement/e (11, 12, 13) an einer Montageoberfläche des Druckelements (5) oder des Kupplungselements (4) angeordnet sind.

3. Kraftübertragungsvorrichtung nach Anspruch 1, wobei das Gleitunterdrückungselement (14) auf einer axial ausgerichteten Oberfläche des Druckelements (5) oder des Kupplungselements (4) angeordnet ist.

4. Kraftübertragungsvorrichtung nach Anspruch 1, wobei die Kraftübertragungsvorrichtung ein Begrenzungselement (10) umfasst, um zu verhindern, dass das Druckelement (5) von dem Kupplungselement (4) getrennt wird und dabei einen vorbestimmten Abstand übersteigt, und wobei die Gleitunterdrückungselemente (15) so an dem Druckelement (5) angeordnet sind, dass sie auf einer Oberfläche des Begrenzungselements (10) gleiten können.

## Revendications

1. Dispositif de transmission de puissance comprenant :
un carter d'embrayage (2) pouvant tourner en même temps qu'un élément d'entrée (1) et ayant, montée sur ledit carter d'embrayage, une pluralité de disques d'embrayage côté menant (6) ;
un élément d'embrayage (4) ayant, montée sur celui-ci, une pluralité de disques d'embrayage côté mené (7), lesdits disques d'embrayage côté mené étant agencés entre les disques d'embrayage côté menant (6), en alternance avec ces derniers,
ledit élément d'embrayage étant relié à un élément de sortie (3) ; et
un élément de pression (5) monté sur l'élément d'embrayage (4) en étant mobile axialement par rapport à l'élément d'embrayage (4), de sorte que les disques d'embrayage côté menant (6) et les disques d'embrayage côté mené (7) sont forcés à être en contact, par pression, les uns avec les autres, et la force de contact par pression agissant sur les disques est relâchée conformément à une approche et à une séparation de l'élément de pression (5) se produisant axialement par rapport à l'élément d'embrayage (4), afin de transmettre une force d'entraînement par rotation, ladite force étant fournie à l'élément d'entrée (1) jusqu'à l'élément de sortie (3), ou bien afin de couper la force d'entraînement par rotation, fournie par l'élément de sortie (3),
**caractérisé en ce que**
le dispositif de transmission de puissance comprend en outre un élément ou des éléments de suppression de glissement (11,12, 13, 14, 15), servant à appliquer à l'élément de pression (5) une résistance au glissement quand l'élément de pression (5) est en rotation par rapport à l'élément d'embrayage (4) ; et
**en ce que** le dispositif de transmission de puissance comprend en outre une came aidant au contact par pression (4a, 5a), ladite came servant à augmenter la force de contact par pression agissant sur les disques d'embrayage côté menant (6) et sur les disques d'embrayage côté mené (7), en provoquant une rotation relative de l'élément de pression (5) et de l'élément d'embrayage (4) et en faisant en sorte de les rapprocher l'un de l'autre quand est atteint un état au cours duquel la force d'entraînement par rotation, fournie à l'élément d'entrée (1), peut être transmise à l'élément de sortie (3), et ledit dispositif de transmission de puissance comprend une came de limitation du couple résistant (4b, 5b), ladite came servant à relâcher la force de contact par pression agissant sur les disques d'embrayage côté menant (6) et sur les disques d'embrayage côté mené (7), en provoquant une rotation relative de l'élément de pression (5) et de l'élément d'embrayage (4) et en les séparant l'un de l'autre quand une vitesse de rotation de l'élément de sortie (3) a dépassé celle de l'élément d'entrée (1).

2. Dispositif de transmission de puissance selon la revendication 1, dans lequel l'élément de pression (5) et l'élément d'embrayage (4) sont assemblés en étant ajustés axialement l'un par rapport à l'autre et dans lequel l'élément ou les éléments de suppression de glissement (11,12, 13) est ou sont agencé(s) sur une surface d'ajustage de l'élément de pression (5) ou de l'élément d'embrayage (4).

3. Dispositif de transmission de puissance selon la revendication 1, dans lequel l'élément de suppression de glissement (14) est agencé sur une surface - faisant face axialement - de l'élément de pression (5) ou de l'élément d'embrayage (4).

4. Dispositif de transmission de puissance selon la revendication 1, où ledit dispositif de transmission de puissance comprend en outre un élément de limitation (10) pour empêcher que l'élément de pression (5) soit séparé de l'élément d'embrayage (4), d'une manière qui dépasse une distance prédéterminée, et où les éléments de suppression de glissement (15) sont agencés sur l'élément de pression (5), de sorte qu'ils peuvent glisser sur une surface de l'élément de limitation (10).
